# FASCICULE DE BREVET EUROPEEN

(11) **EP 2 682 900 B1**
(45) Date de publication et mention de la délivrance du brevet: **31.01.2018**
(21) Numéro de dépôt: 13175407.9
(22) Date de dépôt: 05.07.2013
(51) Int. Cl.: G06K 9/00, G06F 3/042

(54) **Procédé d'authentification d'une signature**
Untershrift Erkennungsmethode
Signature authentication method

(30) Priorité: 06.07.2012 FR 1256553
(43) Date de publication de la demande: 08.01.2014
(73) Titulaire: Ingenico Group, 75015 Paris (FR)
(72) Inventeur: Huteaux, Fabien, 92100 BOULOGNE-BILLANCOURT (FR)
(74) Mandataire: Vidon Brevets & Stratégie

(56) Documents cités:
- EP-A1- 2 474 937
- WO-A1-98/40962
- US-A1- 2007 024 590
- US-A1- 2012 174 213
- H B KEKRE ET AL: "Gabor Filter Based Feature Vector for Dynamic Signature Recognition", INTERNATIONAL JOURNAL OF COMPUTER APPLICATIONS, vol. 2, no. 3, 1 mai 2010 (2010-05-01), pages 74-80, XP055003987, DOI: 10.5120/639-895
- MONWAR M M ET AL: "Multimodal Biometric System Using Rank-Level Fusion Approach", IEEE TRANSACTIONS ON SYSTEMS, MAN AND CYBERNETICS. PART B:CYBERNETICS, IEEE SERVICE CENTER, PISCATAWAY, NJ, US, vol. 39, no. 4, 1 août 2009 (2009-08-01), pages 867-878, XP011345076, ISSN: 1083-4419, DOI: 10.1109/TSMCB.2008.2009071

## Description

### 1. Domaine de l'invention

L'invention se rapporte au domaine de l'authentification. Plus particulièrement, l'invention se rapporte au domaine de l'authentification d'un utilisateur à l'aide d'une signature manuscrite.

### 2. Art antérieur

On connaît de l'art antérieur des dispositifs qui permettent à un utilisateur de saisir des données sur une surface tactile. De tels dispositifs sont par exemple utilisés pour valider la réception des colis livrés par des transporteurs. De tels dispositifs sont également utilisés pour valider une transaction électronique lors d'un paiement par l'intermédiaire d'un terminal de paiement disposant d'un écran tactile sur lequel un utilisateur peut signer afin de valider la transaction. Cette transaction peut également être réalisée à l'aide d'une carte bancaire. Dans ce cas, la signature est une caution apportée à la transaction. L'utilisateur peut dans ce cas être le titulaire de la carte de paiement.

L'authentification du titulaire est le processus consistant à vérifier que l'utilisateur de la carte est le propriétaire ou l'utilisateur autorisé de cette carte. Toutes les applications ne nécessitent pas que le l'identité du titulaire soit vérifiée. Par exemple, la présentation d'une carte de transport à puce contenant un billet ou une autorisation valide est habituellement suffisante pour permettre la circulation sur les transports publics. Lorsqu'il est important de savoir qui est l'utilisateur (comme pour des utilisations financières ou la certification d'identité), la vérification titulaire de la carte est normalement requise.

La méthode classique pour l'authentification d'un titulaire d'une carte est de comparer la signature figurant sur le bordereau de paiement à la signature sur le dos de la carte. Une autre méthode classique consiste à requérir un numéro à 4 chiffres d'identification personnel (NIP). Les clients ont souvent du mal à se souvenir des nombreux codes PIN associés à leurs cartes (en particulier si elles sont rarement utilisées), et sont donc enclins à écrire quelque part ce qui diminue la sécurité du système. Les personnes atteintes de dyslexie peuvent avoir des problèmes à se rappeler les chiffres dans le bon ordre.

De nombreux systèmes biométriques ont été développés pour améliorer la sécurité de l'authentification du titulaire, y compris les empreintes digitales, la reconnaissance de la cornée et la reconnaissance faciale. Ces méthodes peuvent cependant être jugées peu opportunes, en fonction des situations dans lesquelles elles sont utilisées.

Ainsi, en remplacement de ces méthodes, qui peuvent être mal perçues, les méthodes liées à l'authentification de la signature du titulaire, du client ou simplement de l'utilisateur ont fait leur apparition. Ces méthodes d'authentification de la signature se basent sur la reconnaissance de la signature au regard d'un modèle préenregistré. De telles méthodes sont soit statiques soit dynamiques. Les méthodes statiques ont été les premières développées. Les méthodes statiques se basent sur une comparaison de points jugés significatifs de la signature produites par le signataire avec des points de la signature modèle qui sont mémorisés dans une base de données. Lorsque les points significatifs et les points mémorisés concordent, la signature est jugée conforme et le signataire est identifié et/ou authentifié. On comprend que de telles méthodes statiques sont peu sûres car elles permettent à un signataire qui maitrise suffisamment bien la contrefaçon des points significatifs de la signature à imiter d'être identifié et/ou authentifié comme un utilisateur, un titulaire légitime.

Les méthodes dynamiques complètent les méthodes statiques par une analyse dynamique de l'écriture, c'est-à-dire par une analyse dynamique de la progression de l'écriture de la signature sur le support. En d'autre terme, l'analyse est temporelle et les points de comparaison sont étalés dans le temps. Ainsi, on ne vérifie pas uniquement le résultat final, comme c'est le cas des méthodes statiques, mais également la manière dont la signature est réalisée. Pour ce faire, le modèle préenregistré tient également compte de la vitesse et des coordonnées de la signature dans le temps. Dans d'autres modes de réalisation, il est également tenu compte de la pression qui est exercée sur le stylet durant la signature afin de bénéficier d'une donnée de comparaison supplémentaire dans la base de données. De telles techniques sont connues de "Gabor Filter Based Feature Vector for Dynamic Signature Récognition" par H.B. KeKre, publié dans International Journal of Computer Applications, Volume 2 - No.3, Mai 2010. Avec ces techniques de reconnaissance dynamiques, il est plus difficile, pour le signataire, de contrefaire la signature d'un utilisateur. Cependant, cela reste encore possible car d'une part l'écriture à l'aide d'un stylet sur une surface tactile ne permet pas de réaliser une signature constante. Cela signifie que la signature d'un utilisateur légitime est susceptible de varier assez largement en fonction des conditions dans lesquelles la signature est réalisée. Parmi les conditions susceptibles d'influer sur la qualité de la signature, on trouve notamment : la position dans laquelle cette signature est réalisée, la qualité de l'écran tactile, la qualité du stylet, etc.

Ainsi, pour pouvoir quand même reconnaître la signature les implémentations pratiques des méthodes statiques ou dynamiques requièrent l'utilisation de plages de valeurs jugées correctes. Or ces plages de valeurs introduisent par la même un problème de sécurité puisqu'elles permettent à un signataire qui maitrise suffisamment la signature de l'utilisateur dont il souhaite prendre l'identité d'être reconnu comme un utilisateur légitime. Ainsi, il n'est pas assuré, même avec les méthodes connues, que la signature du signataire soit bien celle de l'utilisateur à identifier.

### 3. Résumé de l'invention

L'invention permet de pallier, au moins en partie, cet inconvénient de l'art antérieur. En effet, l'invention se rapporte à un procédé d'enregistrement d'une signature manuscrite d'un utilisateur par l'intermédiaire d'un dispositif comprenant une surface tactile, ledit procédé comprenant une phase d'obtention d'une signature manuscrite comprenant au moins une étape d'acquisition de ladite signature manuscrite sur ladite surface tactile dudit dispositif délivrant une signature acquise et au moins une étape d'enregistrement de ladite signature acquise au sein d'un espace d'enregistrement de signature.

Selon l'invention, ledit procédé comprend en outre, durant ladite phase d'obtention de ladite signature manuscrite, au moins une étape de mesure d'au moins une donnée capacitive complémentaire par l'intermédiaire dudit dispositif et au moins une étape d'enregistrement de ladite au moins une donnée complémentaire.

Ainsi, durant une seule et même phase d'obtention d'une signature manuscrite, l'invention permet de compléter les données acquises et ainsi, postérieurement, de disposer de données complémentaires sur la base desquelles une comparaison complémentaire pourra être effectuée pour authentifier ou non la signature de l'utilisateur. Il est important de noter que c'est durant la phase d'enregistrement que les données complémentaires sont acquises. La technique décrite ne nécessite pas la mise en oeuvre d'une nouvelle phase de capture de données complémentaire qui est dissociée de l'enregistrement de la signature. La technique décrite est donc plus simple à appréhender du point de vue de l'utilisateur/signataire.

Selon une caractéristique particulière, ladite étape de mesure est mise en oeuvre préalablement à ladite étape d'acquisition de ladite signature manuscrite. Ainsi, il est possible de mesurer des grandeurs physiques délivrant des données complémentaires sans interférer avec le processus d'enregistrement. Les données complémentaires sont obtenues préalablement à l'acquisition.

Selon une caractéristique particulière, ladite étape de mesure est mise en oeuvre périodiquement durant ladite étape d'acquisition de ladite signature manuscrite. Ainsi, il est possible de mesurer plusieurs fois des grandeurs physiques délivrant des données complémentaires. Dans ce cas, il est possible d'interrompre temporairement l'étape d'enregistrement. Les données complémentaires sont obtenues concomitamment à l'acquisition. Selon une caractéristique particulière, lorsque deux modules différents sont mis en oeuvre pour la mesure et l'acquisition de signature, il n'est pas nécessaire d'interrompre l'un pour mettre en oeuvre l'autre.

Selon une caractéristique particulière, ledit procédé comprend en outre, préalablement à ladite étape de mesure, d'une étape d'activation d'un module de mesure de ladite donnée complémentaire et postérieurement à ladite étape de mesure, une étape de désactivation de dudit module de mesure de ladite donnée complémentaire.

Ainsi, la mesure des données complémentaire est réalisée de manière ponctuelle et le module qui est utilisé pour ce faire n'est pas susceptible d'être piraté et/ou détourné pour par exemple prendre le contrôle du dispositif.

Selon l'invention, ledit module de mesure de ladite donnée complémentaire est ladite surface tactile et en ce que ladite étape d'activation comprend une étape de modification d'une valeur de sensibilité capacitive de ladite surface tactile et en ce que ladite étape de désactivation de dudit module de mesure comprend une étape de rétablissement de la valeur de sensibilité capacitive de ladite surface tactile.

Ainsi, il n'est pas nécessaire de prévoir d'autres modules que ceux qui existent déjà. Par ailleurs, lors de l'élévation de la sensibilité de la dalle tactile, l'enregistrement de la signature peut se poursuivre. De plus, dans ce mode de réalisation, le piratage ou l'utilisation inappropriée du module est impossible.

L'invention concerne également un procédé d'authentification d'une signature manuscrite d'un utilisateur selon la revendication 4. L'invention concerne également un dispositif d'enregistrement d'une signature manuscrite d'un utilisateur selon la revendication 5. L'invention concerne également un dispositif d'authentification d'une signature manuscrite d'un utilisateur selon la revendication 6. L'invention concerne également un produit programme d'ordinateur téléchargeable depuis un réseau de communication et/ou stocké sur un support lisible par ordinateur et/ou exécutable par un microprocesseur.

Selon l'invention, un tel programme comprend des instructions de code de programme pour l'exécution du procédé d'enregistrement et/ou du procédé d'authentification tel que présenté préalablement.

L'invention vise aussi un support d'informations lisible par un processeur de données, et comportant des instructions d'un programme d'ordinateur tel que mentionné ci-dessus.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit les étapes de la méthode d'enregistrement de signature selon un mode de réalisation ;
- la figure 2 décrit les étapes de la méthode d'authentification de signature selon un mode de réalisation ;
- la figure 3 illustre un dispositif d'enregistrement et d'authentification de signature selon un mode de réalisation ;

### 5. Description.

### 5.1. Rappel

Comme explicité préalablement, l'invention ajoute une nouvelle donnée caractéristique au modèle de signature dynamique.

Plus particulièrement, outre le temps et les classiques coordonnées de saisie de la signature (abscisses et ordonnées), la méthode objet de la présente divulgation prend en compte de nouvelles données qui sans être directement issues de la signature sont tout de même liées à celle-ci par un lien de connexité directement issu de l'utilisateur lui-même.

Dans un mode de réalisation particulier, les données sont des données de positionnement complémentaires mesurées par l'intermédiaire de la dalle tactile sur laquelle la signature est effectuée. Ces données supplémentaires, selon les modes de réalisation envisagés, n'entrent pas directement dans l'authentification de la signature, mais elles sont prises en compte à titre complémentaire pour décider de la validation ou non d'une signature litigieuse. Par signature litigieuse, on entend signature qui présente une incertitude quant à son authenticité. Dans ce cas, les données complémentaires acquises par l'intermédiaire de la dalle tactile permettent de décider de l'acceptation ou non de la signature. Dans d'autres modes de réalisation, ces données complémentaires sont au contraire prépondérantes pour l'authentification de la signature.

En d'autres termes, l'invention permet de réaliser une validation ou une invalidation d'une signature litigieuse à l'aide de données complémentaires qui sont obtenues par l'intermédiaire d'un capteur (comme la dalle tactile) du dispositif sur lequel la signature est effectuée.

L'invention comprend deux aspects distincts :
- le premier aspect est relatif à l'acquisition des données complémentaires. Cette acquisition est réalisée en même temps que l'acquisition de la signature initiale. Selon l'invention, la procédure d'acquisition comprend en plus des données classiques, l'acquisition de données complémentaires. En fonction du mode de réalisation, les données complémentaires peuvent soit être directement incluses dans une base de données soit être prétraitées lors de l'acquisition et c'est le résultat de ce prétraitement qui est inséré dans une base de données.
- le deuxième aspect est relatif à la comparaison d'une signature réalisée par un signataire avec une signature enregistrée afin de réaliser une identification ou une authentification d'un utilisateur. Selon l'invention, la méthode de comparaison de la signature avec une signature enregistrée comprend une étape de comparaison des données complémentaires saisies au regard des données complémentaires enregistrées en base de données. Cette comparaison des données complémentaires peut être au choix, et en fonction de la nature de ces données et des modes de réalisation, prépondérante ou secondaire vis-à-vis de l'authentification de la signature. En d'autres termes, soit les données complémentaires permettent de prendre une décision vis-à-vis d'une signature douteuse ou litigieuse (dans ce cas les données complémentaires interviennent en second lieu), soit les données complémentaires permettent de catégoriser une signature préalablement à sa reconnaissance (dans ce cas les données complémentaires interviennent en premier lieu).

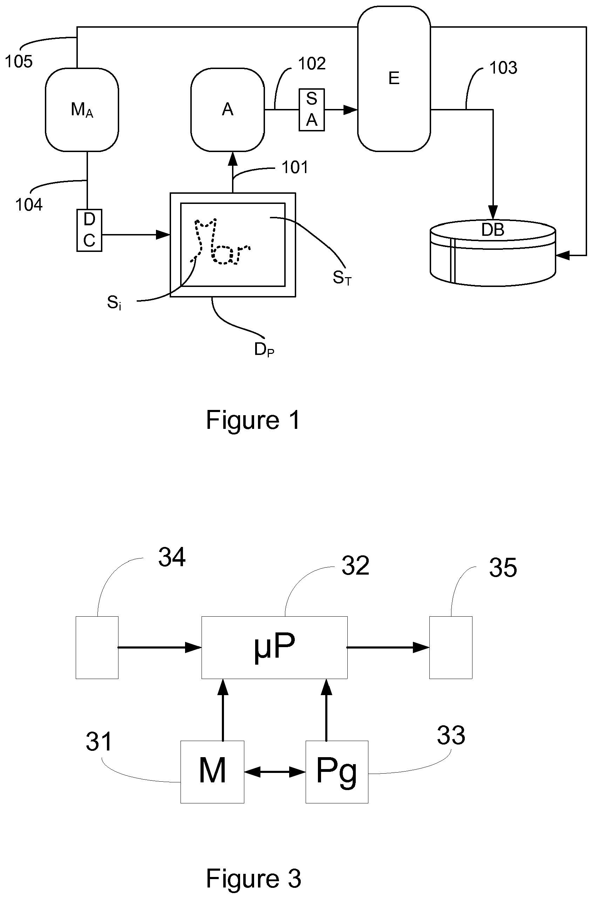

Plus particulièrement en rapport avec la figure 1, on présente un mode de réalisation de la méthode d'enregistrement de signature.

Dans ce mode de réalisation, la méthode d'enregistrement d'une signature manuscrite d'un utilisateur par l'intermédiaire d'un dispositif (DP) comprenant une surface tactile (ST), comprenant une phase d'obtention d'une signature manuscrite (Si) comprenant au moins une étape d'acquisition (101) de ladite signature manuscrite sur ladite surface tactile (ST) dudit dispositif (DP) délivrant (102) une signature acquise (SA) et au moins une étape d'enregistrement (103) de ladite signature acquise (SA) au sein d'un espace d'enregistrement de signature (DB). La méthode comprend en outre, durant ladite phase d'obtention de ladite signature manuscrite, au moins une étape de mesure (104) d'au moins une donnée complémentaire (DC) par l'intermédiaire dudit dispositif (DP) et une étape d'enregistrement (105) de cette donnée complémentaire (DC) au sein dudit espace d'enregistrement de signature (DB). L'étape d'acquisition (101) de la signature est mise en oeuvre par l'intermédiaire d'un module d'acquisition (A). L'étape de délivrance (102) de la signature acquise est également mise en oeuvre par le module d'acquisition (A). La signature acquise (SA) peut être le résultat d'une optimisation ou d'une transformation mathématique qui est réalisée par le module d'acquisition (A). Les étapes d'enregistrement (103, 105) sont mises en oeuvre par un module d'enregistrement (E). Ce module d'enregistrement (E) peut ou non être intégré au module d'acquisition (A).

L'étape de mesure (104) est quant à elle mise en oeuvre par l'intermédiaire d'un module de mesure (MA) qui est également intégré au module d'acquisition (A) en fonction des modes de réalisation. Ce module de mesure (MA) peut, comme cela est présenté infra, être la surface tactile (ST) elle-même. Dans ce cas, le module de mesure et le module d'acquisition sont un seul et même module. Dans d'autres modes de réalisation, le module de mesure (MA) peut par exemple être un capteur CCD, un capteur infrarouge, etc. Lorsque le module de mesure (MA) est un capteur CCD, les données complémentaires peuvent se présenter comme des prises de vues permettant de vérifier la vitesse à laquelle bouge la main. Dans un autre mode de réalisation de l'invention, plusieurs modules de mesure (MA) peuvent être employés. Par exemple, plusieurs capteur CCD (un en haut, un à gauche, un en bas et un à droite) peuvent être disposés autour de la surface tactile (ST) afin de mesurer le mouvement différentiel de la main vis-à-vis des capteurs. Les données complémentaires enregistrées en base de données sont alors de vitesses relatives de déplacement de la main.

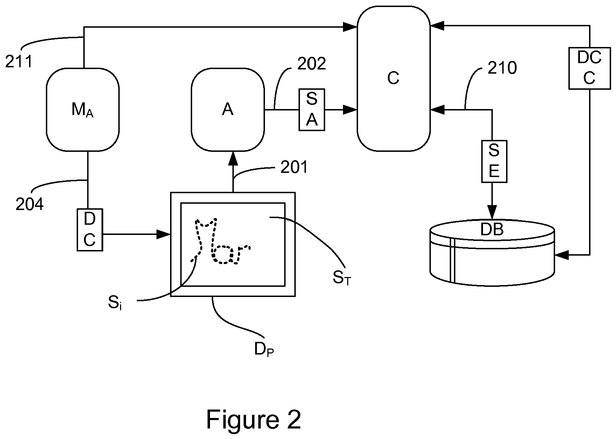

On présente, en relation avec la figure 2, un mode de réalisation de la méthode d'authentification de signature.

Dans ce mode de réalisation, la méthode d'authentification d'une signature manuscrite d'un utilisateur par l'intermédiaire d'un dispositif (DP) comprenant une surface tactile (ST), comprenant une phase d'obtention d'une signature manuscrite comprenant au moins une étape d'acquisition (201) de ladite signature manuscrite sur ladite surface tactile (ST) dudit dispositif (DP) délivrant (202) une signature acquise (SA) et au moins une étape de comparaison (210) de ladite signature acquise (SA) avec une signature enregistrée (SE) au sein d'un espace d'enregistrement de signature (DB). Dans ce mode de réalisation la méthode comprend en outre, durant ladite phase d'obtention de ladite signature manuscrite, au moins une étape de mesure (204) d'au moins une donnée complémentaire (DC) par l'intermédiaire dudit dispositif (DP) et au moins une étape de comparaison (211) de ladite au moins une donnée complémentaire (DC) avec au moins une donnée complémentaire correspondante (DCc) associée à ladite signature enregistrée (SE) au sein dudit espace d'enregistrement de signature (DB).

Les modules qui permettent de mettre en oeuvre cette méthode sont les même que ceux exposé supra, sauf pour le module de comparaison (C). Il permet de réaliser une comparaison des données qui sont reçues des modules d'acquisition et de mesure et de délivrer ou non une assertion de validité de la signature en fonction des comparaisons réalisées. Les autres modules ne sont pas détaillés plus avant.

On présente ci-après un mode de réalisation de la technique décrite, dans lequel les données complémentaires sont relatives au positionnement de la main du signataire sur la surface tactile au moment de la signature. Il est entendu que ce mode de réalisation est purement illustratif du principe de l'invention et ne peut être entendu comme limitant la portée de celle-ci.

### 5.2. Description d'un mode de réalisation

Dans ce mode de réalisation, la dalle tactile de l'écran tactile sur lequel la signature est effectuée est utilisée pour obtenir des données complémentaires relatives à la signature. Dans ce mode de réalisation, le dispositif d'enregistrement et le dispositif d'authentification sont un seul et même dispositif. Il en est d'ailleurs ainsi dans la plupart des cas pour des raisons de praticité et de coût. Ainsi, dans ce mode de réalisation le module de mesure de ladite donnée complémentaire et égal à la surface tactile elle-même. Les inventeurs ont constaté, en réalisant des essais, que dans des conditions particulières, les écrans ou dalles tactiles capacitifs permettent de détecter des objets non neutres (ayant une conductivité relativement élevée, telle qu'une main, ou la pointe d'un stylet...) dans une zone de proximité de la dalle ou de l'écran, c'est-à-dire avant que ces objets n'aient atteint la surface de l'écran ou de la dalle tactile. Cette détection est également possible lorsque l'objet en question a atteint la surface tactile et qu'il est en contact avec elle.

Il est dès lors possible, en capturant au début ou à intervalles réguliers, durant l'écriture de la signature, de mesurer la contribution par exemple de la main de l'utilisateur voulant signer sur l'écran tactile.

Selon une caractéristique particulière, cette étape de mesure de la contribution de la main du signataire est réalisée postérieurement à une étape d'élévation de la sensibilité de l'écran ou de la surface tactile. Selon une caractéristique particulière, postérieurement à ladite étape de mesure, la méthode comprend une étape de rétablissement de la sensibilité à une valeur initiale. Ainsi, l'élévation de la sensibilité est mise en oeuvre de manière temporaire.

La mesure réalisée permet d'obtenir une information de localisation de la main sur la dalle (ou surface tactile). Dans ce mode de réalisation, cette information, qui est relativement peu précise, n'a pas pour objectif de localiser précisément la main de l'utilisateur, ni son déplacement, mais permet de déterminer la façon dont l'utilisateur tient son stylo (s'il est gaucher, droitier) et même plus exactement la position trigonométrique de sa main autour de l'axe du stylo.

Concrètement, dans ce mode de réalisation, il est ainsi possible d'évaluer avec quelle main la signature est réalisée. On comprend ainsi que par exemple si la signature est réalisée avec une main droite alors que l'utilisateur à authentifier est gaucher, il est fort probable que le signataire n'est pas l'utilisateur à authentifier. L'inverse est également vrai (signature par un gaucher alors que l'utilisateur à authentifier est droitier). Ainsi, cette donnée complémentaire, obtenue par l'intermédiaire de ce mode de réalisation, peut permettre d'identifier des signataires contrefaisants.

Selon une caractéristique particulière, il est également possible de déduire indirectement la taille de la main de l'utilisateur, l'écran tactile capacitif projeté mesurant la projection de la surface de la main en regard avec l'écran. Il suffit alors de choisir un moment de la signature (par exemple le premier contact entre le stylet et la dalle) pour effectuer cette mesure.

Lors de la phase de reconnaissance, ou d'authentification, il est alors possible de comparer la taille et la position de la main avec celle précédemment enregistrée.

La figure 3 illustre une structure simplifiée d'un dispositif d'enregistrement et d'authentification selon un mode de réalisation de l'invention. Par exemple, le dispositif d'enregistrement et d'authentification comprend une mémoire 31 constituée d'une mémoire tampon, une unité de traitement 32, équipée par exemple d'un microprocesseur, et pilotée par le programme d'ordinateur 33, mettant en oeuvre un procédé d'enregistrement d'une part et d'authentification d'autre part.

À l'initialisation, les instructions de code du programme d'ordinateur 33 sont par exemple chargées dans une mémoire avant d'être exécutées par le processeur de l'unité de traitement 32. L'unité de traitement 32 reçoit en entrée au moins une donnée représentative d'une signature d'une part et d'une donnée complémentaire d'autre part. Le microprocesseur de l'unité de traitement 32 met en oeuvre les étapes du procédé d'enregistrement et/ou d'authentification, selon les instructions du programme d'ordinateur 33 soit pour enregistrer une signature à reconnaître plus tard, soit pour authentifier une signature déjà enregistrée.

Pour cela, le dispositif comprend, outre la mémoire tampon 31,
- des moyens d'acquisition et de mesure 34, qui ont été décrit supra sous la forme de modules ;
- des moyens d'enregistrement ;
- des moyens de comparaison.

Ces moyens sont pilotés par le microprocesseur de l'unité de traitement 32 pour fournir soit une signature soit une assertion d'authentification.

Les moyens dont il est fait état supra sont au choix, en fonction du mode de réalisation envisagé, soit intégrés sous la forme d'un programme d'ordinateur spécifique, soit distribués, dans des modules électroniques particuliers, comme par exemple des circuits ou processeurs dédiés. Dans une variante de réalisation, une partie ou la totalité des étapes permettant de réaliser le procédé d'enregistrement et/ou de comparaison, peuvent également être implémentées sous forme de matériel dans un composant programmable de type FPGA (« Field Programmable Gate Array » en anglais) ou de type ASIC (« Application-Specific Integrated Circuit » en anglais).

## Revendications

1. Procédé d'enregistrement d'une signature manuscrite (Si) d'un utilisateur par l'intermédiaire d'un dispositif (DP) comprenant une surface tactile (ST), ledit procédé comprenant une phase d'obtention d'une signature manuscrite (Si) comprenant au moins une étape d'acquisition (101) de ladite signature manuscrite sur ladite surface tactile dudit dispositif délivrant (102) une signature acquise (SA) et au moins une étape d'enregistrement (103) de ladite signature acquise au sein d'un espace d'enregistrement de signature (DB), ledit procédé étant **caractérisé en ce qu'**il comprend en outre, durant ladite phase d'obtention de ladite signature manuscrite,
- une étape de modification d'une valeur de sensibilité capacitive de ladite surface tactile ;
- au moins une étape de mesure (104), postérieurement à ladite étape de modification d'une valeur de sensibilité capacitive de ladite surface tactile, d'au moins une donnée complémentaire capacitive (DC) représentative de la taille et/ou de la position de la main dudit utilisateur par ladite surface tactile (ST) ;
- une étape de rétablissement de la valeur de sensibilité capacitive de ladite surface tactile, postérieurement à ladite au moins une étape de mesure ;
- au moins une étape d'enregistrement (105) de ladite au moins une donnée complémentaire capacitive (DC) représentative de la taille et/ou de la position de la main dudit utilisateur.

2. Procédé d'enregistrement selon la revendication 1, **caractérisé en ce que** ladite étape de mesure est mise en oeuvre préalablement à ladite étape d'acquisition de ladite signature manuscrite.

3. Procédé d'enregistrement selon la revendication 1, **caractérisé en ce que** ladite étape de mesure est mise en oeuvre périodiquement durant ladite étape d'acquisition de ladite signature manuscrite.

4. Procédé d'authentification d'une signature manuscrite d'un utilisateur par l'intermédiaire d'un dispositif comprenant une surface tactile, ledit procédé comprenant une phase d'obtention d'une signature manuscrite comprenant au moins une étape d'acquisition de ladite signature manuscrite sur ladite surface tactile dudit dispositif délivrant une signature acquise et au moins une étape de comparaison de ladite signature acquise avec une signature enregistrée au sein d'un espace d'enregistrement de signature, ledit procédé étant **caractérisé en ce qu'**il comprend en outre, durant ladite phase d'obtention de ladite signature manuscrite,
- une étape de modification d'une valeur de sensibilité capacitive de ladite surface tactile ;
- au moins une étape de mesure, postérieurement à ladite étape de modification d'une valeur de sensibilité capacitive de ladite surface tactile, d'au moins une donnée complémentaire capacitive représentative de la taille et/ou de la position de la main dudit utilisateur par ladite surface tactile ;
- une étape de rétablissement de la valeur de sensibilité capacitive de ladite surface tactile, postérieurement à ladite au moins une étape de mesure ;
- au moins une étape de comparaison de ladite au moins une donnée complémentaire capacitive représentative de la taille et/ou de la position de la main dudit utilisateur avec au moins une donnée complémentaire capacitive correspondante associée à ladite signature enregistrée au sein dudit espace d'enregistrement de signature.

5. Dispositif d'enregistrement d'une signature manuscrite d'un utilisateur par l'intermédiaire d'un dispositif comprenant une surface tactile, ledit dispositif d'enregistrement comprenant des moyens d'obtention d'une signature manuscrite comprenant des moyens d'acquisition de ladite signature manuscrite sur ladite surface tactile dudit dispositif délivrant une signature acquise et des moyens d'enregistrement de ladite signature acquise au sein d'un espace d'enregistrement de signature, ledit dispositif étant **caractérisé en ce qu'**il comprend en outre, des moyens de modification d'une valeur de sensibilité capacitive de ladite surface tactile, des moyens de mesure d'au moins une donnée complémentaire capacitive représentative de la taille et/ou de la position de la main dudit utilisateur par ladite surface tactile et des moyens d'enregistrement de ladite au moins une donnée complémentaire capacitive.

6. Dispositif d'authentification d'une signature manuscrite d'un utilisateur par l'intermédiaire d'un dispositif comprenant une surface tactile, ledit dispositif comprenant des moyens d'obtention d'une signature manuscrite comprenant des moyens d'acquisition de ladite signature manuscrite sur ladite surface tactile dudit dispositif délivrant une signature acquise et des moyens de comparaison de ladite signature acquise avec une signature enregistrée au sein d'un espace d'enregistrement de signature, ledit dispositif étant **caractérisé en ce qu'**il comprend en outre, des moyens de modification d'une valeur de sensibilité capacitive de ladite surface tactile, des moyens de mesure d'au moins une donnée complémentaire capacitive représentative de la taille et/ou de la position de la main dudit utilisateur par ladite surface tactile et des moyens comparaison de ladite au moins une donnée complémentaire capacitive représentative de la taille et/ou de la position de la main dudit utilisateur avec au moins une donnée complémentaire capacitive correspondante associée à ladite signature enregistrée au sein dudit espace d'enregistrement de signature.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé d'enregistrement selon l'une quelconque des revendications 1 à 3, lorsqu'il est exécuté sur un ordinateur.

## Patentansprüche

1. Verfahren zur Aufzeichnung einer handschriftlichen Unterschrift (Si) eines Benutzers mit Hilfe einer Vorrichtung (DP), umfassend einen Touchscreen (ST), wobei das Verfahren eine Phase des Erhalts einer handschriftlichen Unterschrift (Si) umfasst, umfassend mindestens einen Schritt der Erkennung (101) der handschriftlichen Unterschrift auf dem Touchscreen der Vorrichtung, der eine erkannte Unterschrift (SA) liefert (102), und mindestens einen Schritt der Aufzeichnung (103) der erkannten Unterschrift in einem Unterschriftenaufzeichnungsraum (DB), wobei das Verfahren **dadurch gekennzeichnet ist, dass** es ferner während der Phase des Erhalts der handschriftlichen Unterschrift umfasst:
- einen Schritt der Änderung eines kapazitiven Sensibilitätswerts des Touchscreens;
- mindestens einen Schritt des Messens (104), nach dem Schritt der Änderung eines kapazitiven Sensibilitätswerts des Touchscreens, mindestens eines komplementären kapazitiven Datums (DC), das für die Größe und/oder die Position der Hand des Benutzers repräsentativ ist, durch den Touchscreen (ST);
- einen Schritt der Wiederherstellung des kapazitiven Sensibilitätswerts des Touchscreens nach dem mindestens einen Messschritt;
- mindestens einen Schritt der Aufzeichnung (105) des mindestens einen komplementären kapazitiven Datums (DC), das für die Größe und/oder die Position der Hand des Benutzers repräsentativ ist.

2. Aufzeichnungsverfahren nach Anspruch 1, **dadurch gekennzeichnet, dass** der Messschritt vor dem Erkennungsschritt der handschriftlichen Unterschrift eingesetzt wird.

3. Aufzeichnungsverfahren nach Anspruch 1, **dadurch gekennzeichnet, dass** der Messschritt periodisch während des Erkennungsschritts der handschriftlichen Unterschrift eingesetzt wird.

4. Verfahren zur Authentifizierung einer handschriftlichen Unterschrift eines Benutzers mit Hilfe einer Vorrichtung, umfassend einen Touchscreen, wobei das Verfahren eine Phase des Erhalts einer handschriftlichen Unterschrift umfasst, umfassend mindestens einen Schritt der Erkennung der handschriftlichen Unterschrift auf dem Touchscreen der Vorrichtung, der eine erkannte Unterschrift liefert, und mindestens einen Schritt des Vergleichs der erkannten Unterschrift mit einer in einem Unterschriftenaufzeichnungsraum aufgezeichneten Unterschrift umfasst, wobei das Verfahren **dadurch gekennzeichnet ist, dass** es ferner während der Phase des Erhalts der handschriftlichen Unterschrift umfasst:
- einen Schritt der Änderung eines kapazitiven Sensibilitätswerts des Touchscreens;
- mindestens einen Schritt des Messens, nach dem Schritt der Änderung eines kapazitiven Sensibilitätswerts des Touchscreens, mindestens eines komplementären kapazitiven Datums, das für die Größe und/oder die Position der Hand des Benutzers repräsentativ ist, durch den Touchscreen;
- einen Schritt der Wiederherstellung des kapazitiven Sensibilitätswerts des Touchscreens nach dem mindestens einen Messschritt;
- mindestens einen Schritt des Vergleichs des mindestens einen komplementären kapazitiven Datums, das für die Größe und/oder die Position der Hand des Benutzers repräsentativ ist, mit mindestens einem entsprechenden komplementären kapazitiven Datum, das der in dem Unterschriftenaufzeichnungsraum aufgezeichneten Unterschrift zugeordnet ist.

5. Vorrichtung zur Aufzeichnung einer handschriftlichen Unterschrift eines Benutzers mit Hilfe einer Vorrichtung, umfassend einen Touchscreen, wobei die Aufzeichnungsvorrichtung Mittel für den Erhalt einer handschriftlichen Unterschrift umfasst, umfassend Mittel zur Erkennung der handschriftlichen Unterschrift auf dem Touchscreen der Vorrichtung, die eine erkannte Unterschrift liefern, und Mittel zur Aufzeichnung der erkannten Unterschrift in einem Unterschriftenaufzeichnungsraum, wobei die Vorrichtung **dadurch gekennzeichnet ist, dass** sie ferner Mittel zur Änderung eines kapazitiven Sensibilitätswerts des Touchscreens, Mittel zum Messen mindestens eines komplementären kapazitiven Datums, das für die Größe und/oder die Position der Hand des Benutzers repräsentativ ist, durch den Touchscreen, und Mittel zur Aufzeichnung des mindestens einen komplementären kapazitiven Datums umfasst.

6. Vorrichtung zur Authentifizierung einer handschriftlichen Unterschrift eines Benutzers mit Hilfe einer Vorrichtung, umfassend einen Touchscreen, wobei die Vorrichtung Mittel für den Erhalt einer handschriftlichen Unterschrift umfasst, umfassend Mittel zur Erkennung der handschriftlichen Unterschrift auf dem Touchscreen der Vorrichtung, die eine erkannte Unterschrift liefern, und Mittel zum Vergleich der erkannten Unterschrift mit einer in einem Unterschriftenaufzeichnungsraum aufgezeichneten Unterschrift, wobei die Vorrichtung **dadurch gekennzeichnet ist, dass** sie ferner Mittel zur Änderung eines kapazitiven Sensibilitätswerts des Touchscreens, Mittel zum Messen mindestens eines komplementären kapazitiven Datums, das für die Größe und/oder die Position der Hand des Benutzers repräsentativ ist, durch den Touchscreen, und Mittel zum Vergleich des mindestens einen komplementären kapazitiven Datums, das für die Position der Hand des Benutzers repräsentativ ist, mit mindestens einem entsprechenden komplementären kapazitiven Datum, das der in dem Unterschriftenaufzeichnungsraum aufgezeichneten Unterschrift zugeordnet ist.

7. Computerprogrammprodukt, das von einem Kommunikationsnetz fernladbar und/oder auf einem von einem Computer lesbaren Träger gespeichert und/oder von einem Mikroprozessor ausführbar ist, **dadurch gekennzeichnet, dass** es Programmcodebefehle für die Ausführung des Aufzeichnungsverfahrens nach einem der Ansprüche 1 bis 3 umfasst, wenn es auf einem Computer ausgeführt wird.

## Claims

1. Method for recording a user's handwritten signature (Si) through a device (DP) comprising a touch-sensitive surface (ST), said method comprising a phase for obtaining a handwritten signature (Si) comprising at least one step for acquiring (101) said handwritten signature on said touch-sensitive surface of said device delivering (102) an acquired signature (SA) and at least one step for recording (103) said acquired signature within a signature-recording space (DB), said method being **characterized in that** it further comprises, during said phase for obtaining said handwritten signature,
- a step for modifying a value of capacitive sensitivity of said touch-sensitive surface;
- at least one step for measuring (104) at least one piece of complementary capacitive data (DC) representing the size and/or the location of the hand of said user through said touch-sensitive surface (ST); and
- a step for restoring the value of capacitive sensitivity of said touch-sensitive surface, after said step for measuring;
- at least one step for recording (105) said at least one piece of complementary capacitive data (DC) representing the size and/or the location of the hand of said user.

2. Method for recording according to claim 1, **characterized in that** said step for measuring is implemented prior to said step for acquiring said handwritten signature.

3. Method for recording according to claim 1, **characterized in that** said step for measuring is implemented periodically during said step for acquiring said handwritten signature.

4. Method for authenticating a user's handwritten signature through a device comprising a touch-sensitive surface, said method comprising a phase for obtaining a handwritten signature comprising at least one step for acquiring said handwritten signature on said touch-sensitive surface of said device delivering an acquired signature and at least one step for comparing said acquired signature with a signature recorded within a signature-recording space, said method being **characterized in that** it further comprises, during said step for obtaining said handwritten signature,
- a step for modifying a value of capacitive sensitivity of said touch-sensitive surface;
- at least one step for measuring at least one piece of complementary capacitive data representing the size and/or the location of the hand of said user through said touch-sensitive surface; and
- a step for restoring the value of capacitive sensitivity of said touch-sensitive surface, after said step for measuring;
- at least one step for comparing said at least one piece of complementary capacitive data representing the size and/or the location of the hand of said user with at least one corresponding piece of complementary capacitive data associated with said signature recorded within said signature-recording space.

5. Device for recording a user's handwritten signature through a device comprising a touch-sensitive surface, said recording device comprising means for obtaining a handwritten signature comprising means for acquiring said handwritten signature on said touch-sensitive surface of said device delivering an acquired signature and means for recording said acquired signature within a signature-recording space, said device being **characterized in that** it furthermore comprises means for modifying a value of capacitive sensitivity of said touch-sensitive surface; means for measuring at least one piece of complementary capacitive data representing the size and/or the location of the hand of said user through said touch-sensitive surface and means for recording said at least one piece of complementary data.

6. Device for authenticating a user's handwritten signature through a device comprising a touch-sensitive surface, said device comprising means for obtaining a handwritten signature comprising means for acquiring said handwritten signature on said touch-sensitive surface of said device delivering an acquired signature and means for comparing said acquired signature with a signature recorded within a signature-recording space, said device being **characterized in that** it further comprises means for modifying a value of capacitive sensitivity of said touch-sensitive surface; means for measuring at least one piece of complementary capacitive data representing the size and/or the location of the hand of said user through said touch-sensitive surface and means for comparing said at least one piece of complementary capacitive data representing the size and/or the location of the hand of said user with at least one corresponding piece of complementary capacitive data associated with said signature recorded within said signature-recording space.

7. Computer program product downloadable from a communications network and/or stored on a computer-readable medium and/or executable by a microprocessor, **characterized in that** it comprises program code instructions for executing the method for recording and/or the method for authenticating according to any one of the claims 1 to 3, when it is executed on a computer.
